# EUROPEAN PATENT SPECIFICATION

(11) **EP 2 394 890 B1**
(45) Date of publication and mention of the grant of the patent: **30.05.2018**
(21) Application number: 10425195.4
(22) Date of filing: 10.06.2010
(51) Int. Cl.: B62D 59/04, B60K 6/52

(54) **Vehicle trailer equipped with an additional traction system, vehicle with said trailer, and method for managing the additional traction system**
Fahrzeuganhänger mit einem zusätzlichen Traktionssystem, Fahrzeug mit dem Anhänger und Verfahren zum Verwalten des zusätzlichen Traktionssystems
Remorque de véhicule équipée d'un système de traction additionnel, véhicule doté de ladite remorque et procédé de gestion du système de traction additionnel

(43) Date of publication of application: 14.12.2011
(73) Proprietor: Iveco S.p.A., 10156 Torino (IT)
(72) Inventor: Bertozzi, Franco, 10040 Druento (IT)
(74) Representative: Franzolin, Luigi

(56) References cited:
- EP-A2- 1 234 739
- DE-A1- 10 131 935

## Description

### Application field of the invention

The present invention relates to the field of auxiliary traction systems for vehicles, and more in particular to a vehicle trailer equipped with an additional traction system, and a vehicle with said trailer, and a method for managing the additional traction system.

### Description of the prior art

In the scope of the present invention the term trailer refers to any kind of towed element, such as a trailer or a semi-trailer provided with at least one axle with wheels equipped with tyres, towed by a motor vehicle such as an automobile, an industrial or commercial vehicle.

At present a towed element is a passive element which does not contribute to the motion changes of the towing vehicle.

Such towed element worsens the performance of the towing vehicle, the fuel consumption, the wear of the traction elements (engine and transmission) and of the braking elements (brakes, decelerators) as well as of the tyres which are forced to discharge more energy to the ground.

A solution to the above problem can be found in DE10131935. The main drawback of the traction system in DE10131935 is the fact that strategies for managing the trailer and the vehicle are not provided in complete detail.

### Summary of the invention

Therefore the aim of the present invention is to overcome the drawbacks mentioned above and to provide a vehicle trailer equipped with its own additional traction system which actively contributes to the motion variations of towing vehicle and towed element as a whole, so that the whole system has the same performance as the vehicle without the towed element.

The object of the present Invention is a method according to claim 1.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figure 1 and 2 show block diagrams of two alternative embodiments of the additional traction system that is object of the present invention;
figures 3 and 4 show flowcharts of the operations performed respectively by the method for managing the traction and/or braking of the motors of the traction system, and the method for managing the energy state of the traction batteries.

In the drawings the same reference numbers and letters identify the same elements or components.

### Detailed description of preferred embodiments of the invention

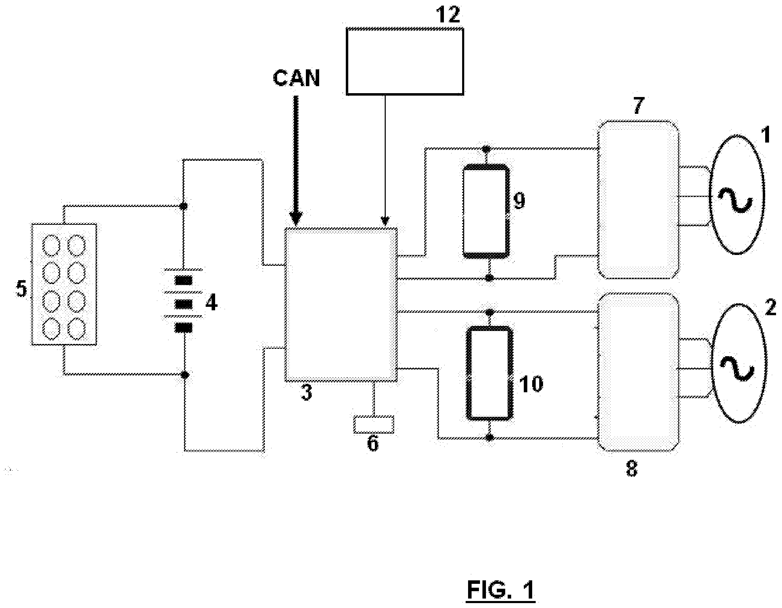

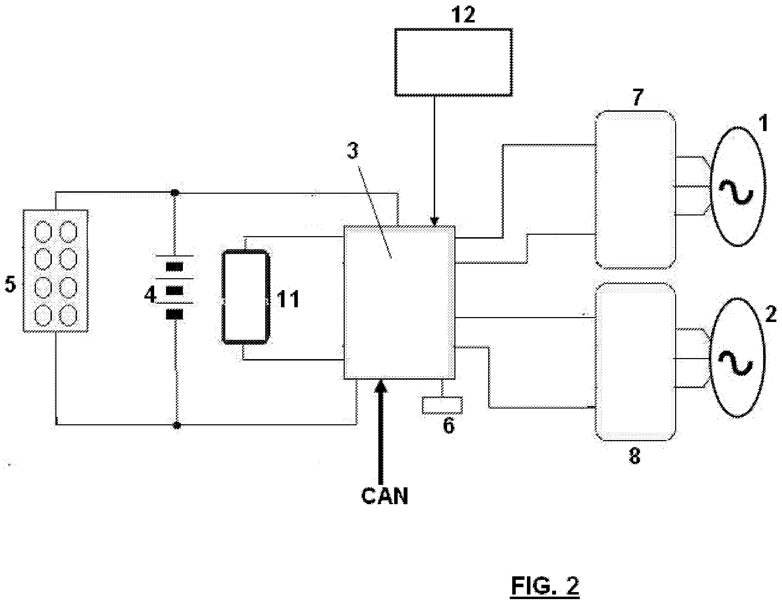

With reference to figures 1 and 2, the trailer is equipped with at least one axle whose normal wheels are replaced by the so-called "wheel motors" 1 and 2, of the type known in the art, for example of the type already available and used in a lot of electric and hybrid applications in the motor vehicle field. Usually there is a pair of wheel motors, symmetrically applied on the two sides of the axle.

In the following there is the description of an embodiment wherein one single axle is equipped with wheel motors, but it is evident that the present invention may equivalently be applied in case of a trailer equipped with two or more driving axles.

The wheel motor is formed by a wheel onto which an electric motor is keyed, the electric motor being of a three phase brushless outrunner type, characterized by a high efficiency, since it coverts the electric energy with very low losses.

The brushless outrunner electric motor (in the following called motor) is of the type with external rotor, whose larger diameter allows the development of more torque, since it is equipped with a lot of external magnets with a large number of poles. It can develop a maximum torque of even 50 kw/h, already available at very low rpm, and it may function both as a motor and as an electrical generator recovering braking energy.

The control of the engine 1 and 2 is actuated by an electronic regulator 3, which regulates rpm and torque in an independent way, substantially regulating the power supplied by a group of high-tension traction batteries 4, by means of inverters 7, 8 of the type known in the art. The group of batteries may advantageously be inserted in the trailer, but it may also be placed on the towing vehicle.

The electronic regulator 3 regulates also the charging of the group of batteries, which may advantageously be charged by means of one or more solar panels 5, for example placed on the roof of the trailer, or it may be charged by an external power supply by means of an appropriate connector 6.

The group of traction batteries 4 may for example be advantageously realized by means of the LiFeP04 technology (lithium-iron phosphate) of the type known in the art, which provides a high power density, high safety, long life, and high power capacity. Such batteries are able to supply current also with very low charging levels (even < 10%).

Preferably one or more supercapacitors or groups of supercapacitors 9, 10, 11 are present, suitable to supply further energy to the motors with very fast charge times and higher discharge current, which is useful in pickup or acceleration.
During the passive phases or while braking they are rapidly charged, by means of the batteries 4 and/or of the motors 1 and 2 functioning as generators. During acceleration they provide electric energy to the system. The electronic regulator 3 has also the function to manage the charging and discharging of the supercapacitors.

More in particular, the alternative embodiment of figure 1 shows a group of supercapacitors connected in parallel with each motor (9, 10), while the alternative embodiment of figure 2 shows one single group of supercapacitors 11.

The solar panels 5 may be constantly connected to the batteries and contribute to their recharging both when the vehicle is stationary and when it is moving. The technology or the solar panel photovoltaic cells may be that or monocrystalline or polycrystalline silicon with a thin, light or flexible panel.

The trailer is usually connected to the towing vehicle by means of a mechanical joint in which a device of the type known called loading cell 12 is advantageously inserted, suitable to control and measure the towing or braking force exerted on the trailer by the towing vehicle, according to both the direction and the sense of the force, with a vector processing on the horizontal travelling plane.

The loading cell is used to modulate the traction or braking contribution during the phases of acceleration, constant speed, deceleration, vehicle movement on a uphill, flat or downhill ground. By means of the measurement of the force exerted on the mechanical joint, the electronic regulator 3 is able to determine the traction or braking torque required to each one or the two motors 1 and 2, in order to keep the vehicle's performance constant, as if the towed element was not present. In particular it is able to differentiate the rotation speed of the two motors so that it simulates the effect of a differential gear when cornering. In fact, the separate control of the rotation speed of each wheel, by applying the necessary torque for the different travelling conditions, allows to always have the right traction/braking torque, avoiding wheel blocking or slipping.

The electronic regulator 3, by means of the CAN vehicle line, receives also data about vehicle braking or acceleration, for example activation of the accelerator and braking pedal, intervention of ABS or ASR or hydraulic retarder known in the art, and it uses also these data for controlling the motors 1 and 2. When the ESP system intervenes to correct vehicle's instability, the trailer modulates the intervention on the wheel motors and therefore actively participates to the stabilization of the whole vehicle-trailer.

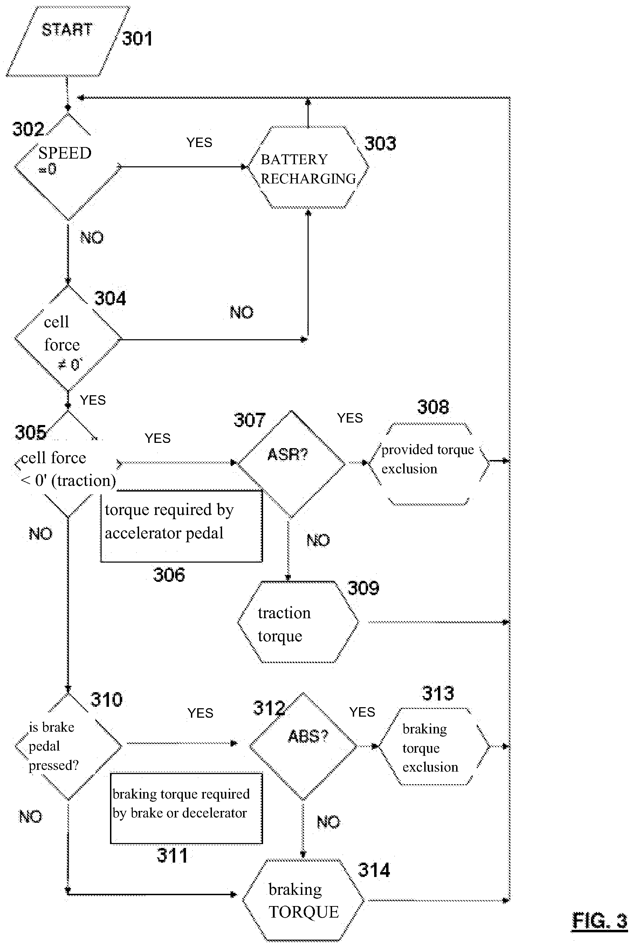

Figure 3 describes the method for managing the traction and/or braking of the motors 1 and 2 by means of the electronic regulator 3. The numbers in brackets identify the relative blocks of the flowchart in fig. 3.

At the beginning (301) the vehicle's speed is checked: if the vehicle is stationary (302, speed = 0), the only action allowed is battery recharging (303), by means of the solar panels 5, and/or the external outlet.

If the vehicle's speed is different than zero, the delivered force measured by the loading cell is checked (304): if it is equal to zero, only the battery recharging is enabled, as in the previous case (303).

If the delivered force measured by the loading cell is different than zero, than the vehicle is either towing or braking.

If the vehicle is towing (305, delivered force measured by cell < 0), the accelerator pedal requires torque (306). If the vehicle ASR system (307) intervenes, the activation of the motor is excluded (308), in order to avoid wheel slipping.
If the ASR system is not intervening, the electronic regulator 3 determines the delivery of the traction torque (309) by the motors 1 and 2, as described in the following.

If, on the contrary, the delivered force measured by the cell is higher than zero (305), the vehicle is braking (force > 0): then the pressure on the brake pedal is checked. If it is pressed, braking torque is required by the brake and/or the retarder of the vehicle (311), and the intervention of the vehicle system ABS is checked (312). If it is intervening, the activation of the motors as braking torque is excluded (313), in order to avoid the wheel blocking.

On the contrary, if the ABS system is not intervening, the electronic regulator 3 determines the delivery of braking torque by the motors 1 and 2 (314), as described in the following.

The electronic regulator 3 calculates the traction or braking torque that has to be generated independently by each one of the motors 1 and 2, as a function of the percentage of traction or thrust force applied to the loading cell, and of the available energy from the batteries and from the supercapacitors, so that the performance of towing vehicle and towed element as a whole is potentially equivalent to, or at least approximate to, the performance of the vehicle without the towed element, so that said traction or thrust force are thus minimized.

By independently controlling the motors, it is possible to obtain also a stability control of the vehicle, as described above.

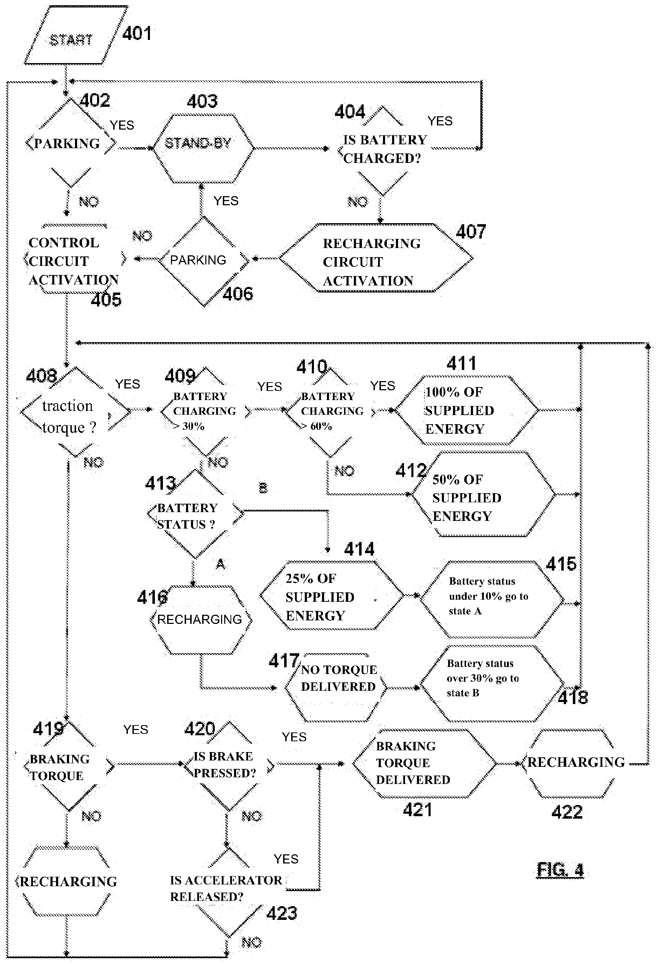

With reference to figure 4, the method for managing the energy state of the traction batteries is described, such method being actuated by means of the electronic regulator 3, which includes a circuit controlling the charging level, which uses an already available circuit measuring the charging level.

The numbers in brackets identify the relative blocks of the flowchart in fig. 4.

At the beginning (401), if the vehicle is stationary (402, parked vehicle), the circuit controlling the charging level is in standby mode (403), therefore only the charging state of the batteries is checked (404): if they are charged, no further operation is performed, otherwise the battery recharging is activated (407) by means of the external outlet 6, assuming that the solar panels 5 are always connected and able to provide charging energy.

If the vehicle is moving (406), the circuit controlling the charging level is activated (405).

If a traction condition is detected at the loading cell and a determined traction torque is required to the motors 1 and 2 (408), a procedure controlling the charging level of the batteries is actuated with reference to a number of thresholds of charging percentage, in order to determine the percentage of the power supplied by the batteries with respect to the value required for generating the torque required to the motors.

In the non limitative example described below, three percentages of battery charging level are taken as a reference, respectively high (60%), medium (30%) and low (10%).

If the charging level is higher than 30% (409), and if it also higher than 60% (410), batteries are allowed to deliver the maximum of the available energy (411).

If the charging level is between 30% and 60% (410), batteries are allowed to deliver a percentage of the available energy, for example 50% (412).

If the charging level is lower than 30% (409), and between 30% and 10% (state B), batteries are allowed to deliver a lower percentage of the available energy, for example 25% (414).

If the charging level is lower than 10% (state A), batteries are disabled and the motors are not power supplied (417), enabling the recharging of the batteries (416). The transition between state A and B may occur (415, 418). The situation in which the motors 1 and 2 are deactivated for a long time may also occur, if the charging status of the batteries remains under 10%: in this case it may be necessary a stop of the vehicle for charging the batteries by external outlet or solar panels.

If a thrust condition is detected at the loading cell and braking torque is required to the motors 1 and 2 (419), then the pressure on the brake pedal is checked (420) : if the brake pedal is pressed, the delivery of braking torque is enabled according to the request (421), and the batteries are recharged by means of the motors 1 and 2 functioning as electrical generators (422).

On the contrary, if there is no action on the brake pedal (420), the pressure on the accelerator pedal is checked (423): this control is necessary to verify the uphill travelling condition of the vehicle.

If the accelerator pedal is released, the vehicle is not travelling on a uphill ground: therefore the procedure goes back to the previous situation which enables the delivery of braking torque if required (421).

If, on the contrary, the accelerator pedal is not released, the vehicle is travelling on a uphill ground: therefore the control goes back to the initial condition (401).

The methods described above for managing of the traction and/or braking of the motors 1 and 2, and for managing the energy state of the traction batteries may advantageously be performed by means of a computer program, stored in said electronic regulator 3, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that other alternative and equivalent embodiments of the invention can be conceived and reduced to practice without departing from the scope of the invention.

The advantages deriving from the use of this invention are evident.

The main advantages of the system with respect to the conventional coupling tractor-trailer are the following:
- the use of wheel motors optimizes the ratio between performance improvement and increase of towed weight, since they are not heavy, have a high efficiency, and do not need further mechanical devices for the transmission of the motion;
- optimal control strategy actuates with redundancy, using both the signals available on the CAN line and the signals generated by the loading cell.
- Lower fuel consumption.
- Improved performance.
- More torque and power to counter the additional weight.
- Higher stability of the system.
- Higher braking power and smaller stop distance.

## Claims

1. Method for managing the traction and/or braking of the electric engines (1, 2) applied to the wheels of at least one axle of a trailer suitable for being towed by a motor vehicle, said trailer comprising:
- at least part of a vehicle data line (CAN);
- at least one loading cell (12) suitable for measuring the traction or thrust force exerted on the trailer;
- at least a group of traction batteries (4);
- an electronic regulator (3) suitable for regulating the charging and the power supply of said group of traction batteries (4) and suitable for regulating the power supply to said motors (1, 2); said method comprising a sequence of steps for:
- controlling the independent activation of the motors providing traction torque or braking torque in order to minimize said traction or thrust force;
- controlling the management of the energy state of the batteries (4), in case of traction torque, by regulating the power supply to said motors (1, 2) from at least said batteries (4); in case of braking torque, by regulating the power supply of said braking torque and the recharging of said batteries by means of said motors,
said method being **characterized in that** said sequence of steps for controlling the independent activation of the motors comprises:
- checking of the vehicle's speed, and of the force delivered and measured by the loading cell: if said speed or said delivered force is equal to zero allowing only the recharging of said group of traction batteries (4);
- if the vehicle ASR system is not intervening, if said speed is different than zero, and if said force is lower than zero, activating said motors (1, 2) to provide said traction torque;
- if the vehicle ABS system is not intervening, if said speed is different than zero, and if said force is greater than zero activating said motors (1, 2) to provide said braking torque.

2. Method as in claim 1, wherein said sequence of steps for controlling the management of the energy state of the batteries comprises, in case of traction torque, a control of the charging level of the batteries referred to a number of thresholds of charging percentage, in order to determine the percentage of the power supplied by the batteries with respect to the value required for generating the torque required to the motors.

3. Method as in claim 2, wherein in case of three thresholds of charging percentage:
- if the charging level of the batteries is higher than a high threshold (60%), the percentage of energy delivered by the batteries is maximum (100%);
- if the charging level of the batteries is between a medium threshold (30%) and said high threshold (60%), the percentage of energy delivered by the batteries is a first percentage (50%) of said maximum percentage;
- if the charging level of the batteries is between said medium threshold (30%) and a low threshold (10%), the percentage of energy delivered by the batteries is a second percentage (25%) of said maximum percentage, lower than said first threshold;
- if the charging level of the batteries is lower than said low threshold (10%), no energy is delivered by the batteries.

4. Method as in claim 1, wherein said sequence of steps for controlling the management of the energy status of the batteries, in case of braking torque,
it comprises the checking of the activation of brake and accelerator, such that, if the brake is activated or is the accelerator is released, it regulates the delivery of said braking torque and the recharging of said batteries by means of said motors.

5. Computer program comprising program code means suitable for performing the steps of any claim from 1 to 4, when such program is run on a computer.

6. Computer-readable means comprising a recorded program, said computer-readable means comprising program code means suitable for performing the steps according to the claims from 1 to 4, when said program is run on a computer.

## Patentansprüche

1. Verfahren zum Verwalten der Traktion und/oder des Bremsens der elektrischen Motoren (1,2) an den Rädern zumindest einer Achse eines Anhängers, dazu geeignet, von einem Motorfahrzeug gezogen zu werden, welcher Anhänger umfasst:
- zumindest einen Teil einer Fahrzeugdatenleitung (CAN);
- zumindest eine Ladezelle (12), geeignet zur Messung der Traktion oder einer Schubkraft, die auf den Anhänger ausgeübt wird;
- zumindest eine Gruppe von Traktionsbatterien (4);
- einen elektronischen Regler (3), geeignet zur Regelung des Ladens und der Energieversorgung der Gruppe von Traktionsbatterien (4) und geeignet zur Regelung der Energieversorgung der Motoren (1,2); welches Verfahren eine Abfolge von Schritten umfasst, zum:
- Steuern der unabhängigen Aktivierung der Motoren, die ein Traktionsdrehmoment oder ein Bremsdrehmoment liefern, zur Minimierung der Traktion oder der Schubkraft;
- Steuern der Verwaltung des Energiezustands der Batterien (4), im Fall des Traktionsdrehmoments, durch Regelung der Energieversorgung der Motoren (1,2) zumindest durch die Batterien (4); im Fall eines Bremsdrehmoments, durch Regelung der Energieversorgung des Bremsdrehmoments und des Wiederaufladens der Batterien durch die Motoren,
welches Verfahrens **dadurch gekennzeichnet ist, dass** die Abfolge von Schritten zur Steuerung der unabhängigen Aktivierung der Motoren umfasst:
- Prüfen der Fahrzeuggeschwindigkeit und der Kraft, die von der Ladezelle geliefert und gemessen wird; falls diese Geschwindigkeit oder die gelieferte Kraft gleich Null ist: Zulassen ausschließlich des Wiederaufladens der Gruppe von Traktionsbatterien (4);
- falls das Fahrzeug-Antriebsschlupfsystem (ASR) nicht eingreift, falls die Geschwindigkeit ungleich Null ist, und falls die Kraft kleiner als Null ist: Aktivierung der Motoren (1,2) zur Lieferung des Traktionsdrehmoments;
- falls das Fahrzeug-Antiblockiersystem (ABS) nicht eingreift, falls die Geschwindigkeit ungleich Null ist, und falls die Kraft größer als Null ist: Aktivierung der Motoren (1,2) zur Lieferung des Bremsdrehmoments.

2. Verfahren gemäß Anspruch 1, bei welchem die Abfolge von Schritten zur Steuerung der Verwaltung des Energiezustands der Batterien im Fall des Traktionsdrehmoments eine Steuerung des Ladungsniveaus der Batterien umfasst, welches sich auf eine Anzahl von Schwellen eines prozentualen Ladezustands bezieht, zur Ermittlung des prozentualen Anteils der den Batterien zugeführten Leistung relativ zu dem Wert, der benötigt wird, um das Drehmoment zu erzeugen, das von den Motoren gefordert wird.

3. Verfahren gemäß Anspruch 2, bei welchem im Fall von drei Schwellen eines prozentualen Ladezustands folgendes gilt:
- falls das Ladungsniveau der Batterien höher ist als eine hohe Schwelle (60%), ist der prozentuale Anteil der von den Batterien gelieferten Energie maximal (100%);
- falls das Ladungsniveau der Batterien zwischen einer mittleren Schwelle (30%) und der hohen Schwelle (60%) liegt, ist der prozentuale Anteil der Energie, der von den Batterien geliefert wird, ein erster prozentualer Anteil (50%) des maximalen prozentualen Anteils;
- falls das Ladungsniveau der Batterien zwischen der mittleren Schwelle (30%) und einer niedrigen Schwelle (10%) liegt, ist der prozentuale Anteile der Energie, die von den Batterien geliefert wird, ein zweiter prozentualer Anteil (25%) von dem maximalen prozentualen Anteil, niedriger als die erste Schwelle;
- falls das Ladungsniveau der Batterien niedriger ist als die niedrige Schwelle (10%), wird keine Energie von den Batterien abgegeben.

4. Verfahren gemäß Anspruch 1, bei welchem die Abfolge von Schritten zur Steuerung der Verwaltung des Energiezustands der Batterien im Fall des Bremsdrehmoments die Prüfung umfasst, ob Bremse und Beschleuniger aktiviert sind, derart, dass dann, wenn die Bremse aktiviert ist oder der Beschleuniger gelöst ist, die Zuführung des Bremsdrehmoments und das Wiederaufladen der Batterien durch die Motoren geregelt wird.

5. Rechnerprogramm, umfassend Rechnercodemittel, geeignet zur Durchführung der Schritte von einem der Ansprüche 1 bis 4, wenn dieses Programm auf einem Rechner ausgeführt wird.

6. Rechnerlesbare Mittel, umfassend ein aufgezeichnetes Programm, welche rechnerlesbaren Mittel Programmcodemittel umfassen, geeignet zur Durchführung der Schritte gemäß den Ansprüchen 1 bis 4, wenn das Programm auf einem Rechner ausgeführt wird.

## Revendications

1. Procédé de gestion de la traction et/ou du freinage des moteurs électriques (1, 2) appliqués aux roues d'au moins un essieu d'une remorque convenant pour être remorquée par un véhicule à moteur, ladite remorque comprenant :
- au moins une partie d'une ligne de données de véhicule (CAN) ;
- au moins un capteur d'efforts (12) convenant pour mesurer la force de traction ou de poussée exercée sur la remorque ;
- au moins un groupe de batteries de traction (4) ;
- un régulateur électronique (3) convenant pour réguler la charge et l'alimentation électrique dudit groupe de batteries de traction (4) et convenant pour réguler l'alimentation électrique desdits moteurs (1, 2) ; ledit procédé comprenant une séquence d'étapes pour :
- la commande de l'activation indépendante des moteurs fournissant un couple de traction ou un couple de freinage afin de minimiser ladite force de traction ou de poussée ;
- la commande de la gestion de l'état d'énergie des batteries (4), en cas d'un couple de traction, en régulant l'alimentation électrique desdits moteurs (1, 2) à partir d'au moins lesdites batteries (4) ; en cas d'un couple de freinage, en régulant l'alimentation électrique dudit couple de freinage et la recharge desdites batteries au moyen desdits moteurs,
ledit procédé étant **caractérisé en ce que** ladite séquence d'étapes pour la commande de l'activation indépendante des moteurs comprend :
- la vérification de la vitesse du véhicule, et de la force délivrée et mesurée par le capteur d'efforts : si ladite vitesse ou ladite force délivrée est égale à zéro, ne permettre que la recharge dudit groupe de batteries de traction (4) ;
- si ledit système ASR du véhicule n'intervient pas, si ladite vitesse est différente de zéro, et si ladite force est inférieure à zéro, l'activation desdits moteurs (1, 2) pour fournir ledit couple de traction ;
- si le système ABS du véhicule n'intervient pas, si ladite vitesse est différente de zéro, et si ladite force est supérieure à zéro, l'activation desdits moteurs (1, 2) pour fournir ledit couple de freinage.

2. Procédé selon la revendication 1, dans lequel ladite séquence d'étapes pour la commande de la gestion de l'état d'énergie des batteries comprend, en cas d'un couple de traction, une commande du niveau de charge des batteries qualifié de nombre de seuils de pourcentage de charge, afin de déterminer le pourcentage de la puissance fournie par les batteries relativement à la valeur requise pour générer le couple requis par les moteurs.

3. Procédé selon la revendication 2, dans lequel en cas des trois seuils de pourcentage de charge :
- si le niveau de charge des batteries est plus élevé qu'un seuil haut (60 %), le pourcentage d'énergie délivrée par les batteries est maximal (100 %) ;
- si le niveau de charge des batteries est compris entre un seuil moyen (30 %) et ledit seuil haut (60 %), le pourcentage d'énergie délivrée par les batteries est un premier pourcentage (50 %) dudit pourcentage maximal ;
- si le niveau de charge des batteries est compris entre ledit seuil moyen (30 %) et un seuil bas (10 %), le pourcentage d'énergie délivrée par les batteries est un second pourcentage (25 %) dudit pourcentage maximal, inférieur audit premier seuil ;
- si le niveau de charge des batteries est inférieur audit seuil bas (10 %), aucune énergie n'est délivrée par les batteries.

4. Procédé selon la revendication 1, dans lequel ladite séquence d'étapes pour la commande de la gestion de l'état d'énergie des batteries, en cas d'un couple de freinage,
comprend la vérification de l'activation de frein et d'accélérateur, de telle sorte que, si le frein est activé ou si l'accélérateur est libéré, elle régule la délivrance du couple de freinage et la recharge desdites batteries au moyen desdits moteurs.

5. Programme d'ordinateur comprenant des moyens de code de programme convenant pour réaliser les étapes de l'une quelconque des revendications 1 à 4, lorsqu'un tel programme est exécuté sur un ordinateur.

6. Moyens lisibles par ordinateur comprenant un programme enregistré, lesdits moyens lisibles par ordinateur comprenant des moyens de code de programme convenant pour réaliser les étapes selon l'une quelconque des revendications 1 à 4, lorsque ledit programme est exécuté sur un ordinateur.
